# EUROPÄISCHE PATENTSCHRIFT

(11) **EP 2 898 250 B1**
(45) Veröffentlichungstag und Bekanntmachung des Hinweises auf die Patenterteilung: **08.11.2017**
(21) Anmeldenummer: 13765969.4
(22) Anmeldetag: 26.08.2013
(51) Int. Cl.: F16L 25/01, F16L 25/14, F16L 53/00, F01N 3/20

(54) **VERBINDUNGSELEMENT FÜR EINEN BEHEIZBAREN SCHLAUCH**
CONNECTING ELEMENT FOR A HEATABLE HOSE
ÉLÉMENT DE RACCORDEMENT POUR TUYAU FLEXIBLE CHAUFFANT

(30) Priorität: 19.09.2012 DE 102012018423
(43) Veröffentlichungstag der Anmeldung: 29.07.2015
(73) Patentinhaber: Eugen Forschner GmbH, 78549 Spaichingen (DE)
(72) Erfinder: ACKERMANN, Janosch, 78549 Spaichingen (DE); CHALOUPKA, Thomas, 78549 Spaichingen (DE)
(74) Vertreter: Wiese, Gerhard
(86) Internationale Anmeldenummer: PCT/EP2013/067654
(87) Internationale Veröffentlichungsnummer: WO 2014/044499

(56) Entgegenhaltungen:
- DE-A1- 19 641 358
- DE-U1-202007 010 502
- DE-U1-202007 018 086
- FR-A1- 2 772 107
- US-A1- 2008 271 801

## Beschreibung

Die Erfindung betrifft ein Verbindungselement für einen beheizbaren Schlauch. Beheizbare Schläuche werden in der Nutzfahrzeug- und Automobilindustrie derzeit hauptsächlich bei der Kraftstoffversorgung verwendet, vorwiegend um Harnstoff- Wasser- Gemische zu leiten, da diese besondere Anforderungen an die Umgebungstemperatur stellen, um fließfähig zu bleiben. Für die Verbindung oder die Verzweigung derartiger beheizbarer Schläuche und/oder für deren elektrische Kontaktierung sind Verbindungselemente vorgesehen. Ein derartiges Verbindungselement ist beispielsweise aus der DE 20 2007 018 086 U1 bekannt.

In der Nutzfahrzeug- und Automobilindustrie werden meistens mehrere, in aller Regel auch der SAE-Norm für den nordamerikanischen Markt entsprechende Schlauchdurchmesser verwendet, für die unterschiedliche Verbindungselemente bereitgestellt werden müssen. In der DE 20 2007 018 086 U1 werden Wellrohre, die die Schläuche zu deren Schutz umgeben, mit einem verdickten Ringkragen in ein formschlüssig an das Innere des Gehäuses des Verbindungselements angepasstes Ansatzteil 60 eingelegt und anschließend gemeinsam mit den elektrischen Anschlüssen durch eine Verkapselung dauerhaft mit dem Gehäuse vergossen.

Aus der DE 196 41 358 A1 ist eine Rohrverbindungsmanschette bekannt, deren Enden mit abgestuften Aufnahmen zur Aufnahme von Rohren mit unterschiedlichen Durchmessern geeignet sind. Die äußere Aufnahme ist für ein im Durchmesser kleineres Rohr ausgelegt und muss durch Abbrechen an einer vordefinierten Einkerbung von der Manschette entfernt werden, bevor ein im Durchmesser größeres Rohr mit der dafür ausgelegten, weiter innen liegenden größeren Aufnahme verbindbar ist. Nach dem Abbrechen der äußeren Aufnahme ist die Manschette zur Befestigung eines kleineren Rohres nicht mehr geeignet.

Aus der FR 2 772 107 A1 ist eine zur Aufnahme von Ummantelungen mit zwei verschiedenen Außendurchmessern ausgelegte Manschette bekannt. Dabei ist das Verbindungselement von außen nach innen mit einer ersten größeren Aufnahme für eine im Außendurchmesser größere Ummantelung und daran anschließend mit wenigstens einer kleineren Aufnahme für eine im Außendurchmesser kleinere Ummantelung des beheizbaren Schlauchs versehen.

US 2008/0271801 A1 wird als nächstliegender Stand der Technik angesehen und offenbart ein Verbindungselement für einen beheizbaren Schlauch mit einem inneren Schlauchteil und einer Ummantelung. Das Verbindungselement hat eine Aufnahme für die Ummantelung und einen Anschlussstutzen für das innere Schlauchteil.

Es ist Aufgabe der vorliegenden Erfindung, ein Verbindungselement für einen beheizbaren Schlauch zu Verfügung zu stellen, das in einfacher Weise auch wiederholt für unterschiedliche Schlauchdurchmesser verwendbar ist.

Diese Aufgabe wird durch die Merkmale des Anspruchs 1 gelöst. Vorteilhafte Ausgestaltungen der Erfindung sind in den Unteransprüchen angegeben.

Die erfinderische Lösung sieht vor, dass der Anschlussstutzen wenigstens zwei unterschiedliche Durchmesser zur Anbringung wenigstens zweier verschiedener Schlauchteile mit unterschiedlichen Innendurchmessern aufweist. Die erfinderische Lösung sieht ferner vor, dass das Verbindungselement von außen nach innen mit einer größeren Aufnahme für eine im Außendurchmesser größere Ummantelung und daran anschließend mit wenigstens einer kleineren Aufnahme für eine im Außendurchmesser kleinere Ummantelung des beheizberen Schlauchs versehen ist. Bevorzugt weist das Gehäuse des Verbindungselements wenigstens ein weiteres Aufnahmeteil zur Aufnahme wenigstens einer elektrischen Anschlussleitung auf. Die Ummantelung der elektrischen Anschlussleitung kann dabei besonders vorteilhaft ebenfalls in wenigstens zwei unterschiedlichen Aufnahmen für wenigstens zwei verschiedene Durchmesser aufgenommen werden.

Gemäß einer besonders bevorzugten Ausführungsform der Erfindung ist vorgesehen, dass die Ummantelung als Wellrohr ausgebildet ist und die Aufnahmen mit an die Abstände der Wellen des Wellrohrs angepassten Rippen versehen sind.

In einer vorteilhaften Weiterbildung der Erfindung ist vorgesehen, dass der Anschlussstutzen an einem im Gehäuse festlegbaren separaten Bauteil angeordnet ist. Das Gehäuse weist dann bevorzugt wenigstens ein Formschlusselement zur Festlegung dieses separaten Bauteils auf.

Das innere Schlauchteil ist mit dem Anschlussstutzen vorteilhaft durch Kleben und/oder durch ein zusätzliches Befestigungselement, wie beispielsweise einen Crimp-Ring verbunden.

In einer besonders vorteilhaften Ausführungsform weist das Gehäuse wenigstens zwei Gehäuseschalen auf, die bevorzugt mittels wenigstens eines Filmscharniers schwenkbar aneinander gelagert sind und mittels wenigstens einer Rastvorrichtung miteinander verrastbar sind. Das Gehäuse lässt sich dadurch nach Art einer Klapphülse in einfacher Weise von außen um die beheizbaren Schläuche, die elektrischen Anschlüsse und die bevorzugt als Wellrohr ausgebildeten Ummantelungen legen.

Nachfolgend werden mehrere Ausführungsbeispiele eines erfindungsgemäßen Verbindungselements für einen beheizbaren Schlauch unter Bezugnahme auf die Zeichnungen näher erläutert. Es zeigt:
- Fig. 1: einen schematischen Schnitt eines geraden Verbindungselements mit einer elektrischen Kontaktierung, verbunden mit einem kleineren beheizbaren Schlauch,
- Fig. 2: einen schematischen Schnitt des geraden Verbindungselements gemäß Fig. 1 verbunden mit einem größeren beheizbaren Schlauch,
- Fig. 3: einen schematischen Schnitt eines abgewinkelten Verbindungselements mit einer elektrischen Kontaktierung, verbunden mit einem kleineren beheizbaren Schlauch,
- Fig. 4: einen schematischen Schnitt des abgewinkelten Verbindungselements gemäß Fig. 1 verbunden mit einem größeren beheizbaren Schlauch, und
- Fig. 5: einen mehrfach abgestuften Schlauch-Anschlussstutzen.

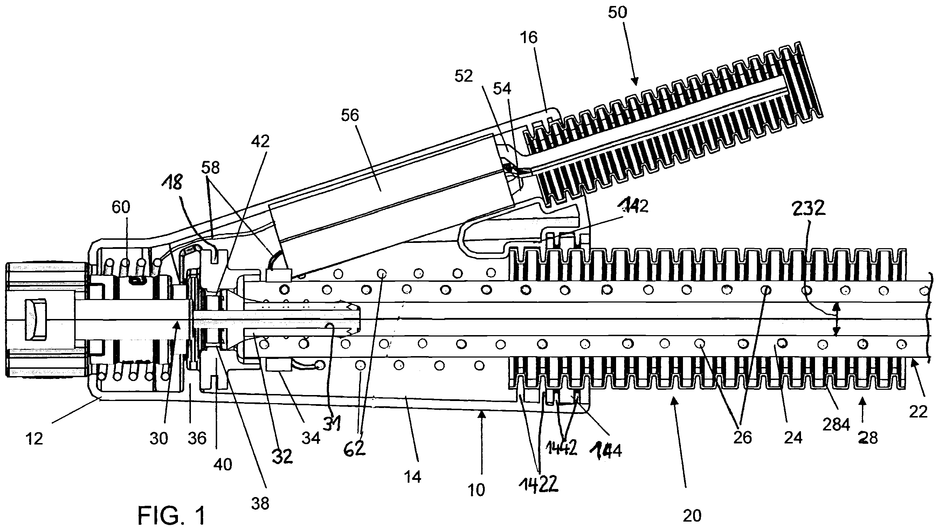

In Figur 1 wird ein Verbindungselement 10 für einen beheizbaren Schlauch 20 gemäß einem ersten bevorzugten Ausführungsbeispiel der Erfindung dargestellt.

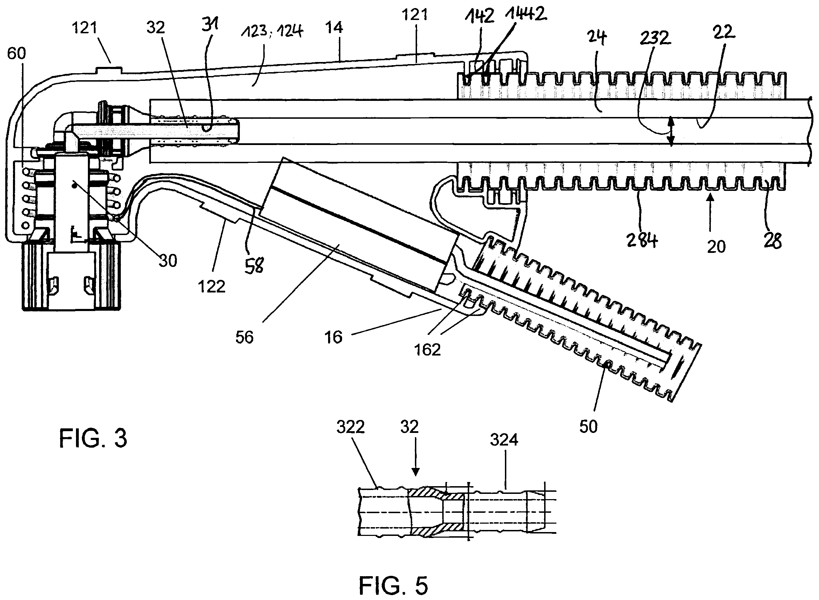

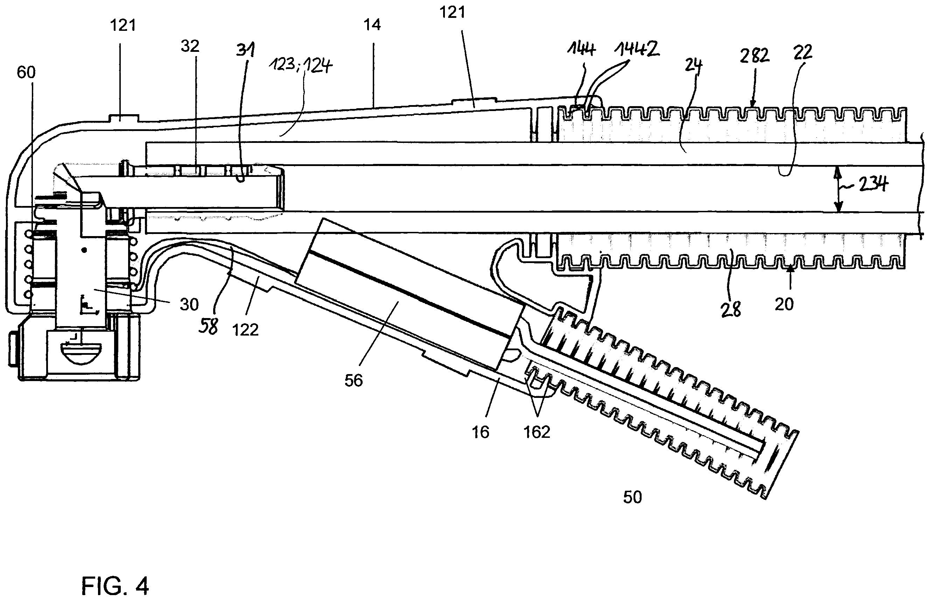

Das Verbindungselement 10 ist mit einem zweischaligen Gehäuse 12 ausgebildet. Die Darstellungen in den Figuren 1 bis 4 zeigen jeweils einen Schnitt durch die Trennebene der beiden Schalen 123, 124 des Gehäuses 12 und entsprechen somit einer Draufsicht auf eine der Gehäuseschalen 123 im aufgeklappten Zustand. Die nicht dargestellte zweite Schale 124 des Gehäuses 12 ist symmetrisch dazu ausgebildet, bevorzugt durch wenigstens ein Filmscharnier 121 auf einer Seite mit der anderen Gehäuseschale 123 verbunden und durch Zusammenklappen und Verrasten mit der ersten Gehäusehälfte123 nach Art einer Klapphülse zu einem geschlossenen Gehäuse 12 zusammenfügbar. Die Filmscharniere 121 und die Rastelemente 122 sind nur in den Figuren 3 und 4 angedeutet. Wenn nachfolgend Details des Gehäuses 12 anhand der dargestellten Gehäusehälften beschrieben werden, beziehen sich diese Details immer auch auf die andere Gehäusehälfte.

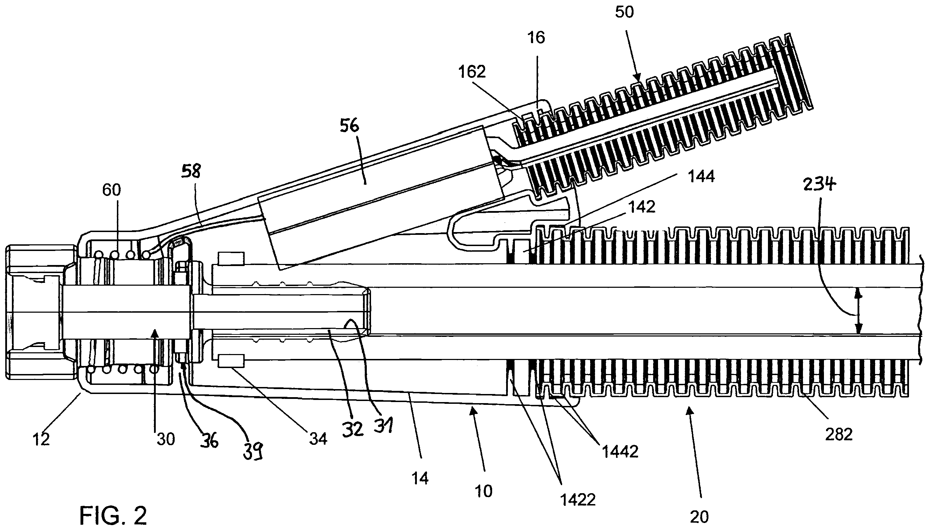

Das Gehäuse 12 weist ein erstes Aufnahmeteil 14 zur Aufnahme des beheizbaren Schlauchs 20 auf. Das Gehäuse 12 weist ferner ein zweites Aufnahmeteil 16 zur Aufnahme einer elektrischen Anschlussleitung 50 für die Heizstromversorgung auf. Das erste Aufnahmeteil 14 ist in den Figuren 1 bis 4 von rechts außen nach innen mit einer ersten größeren Aufnahme 144 für eine im Außendurchmesser 282 größere Ummantelung 28 des beheizbaren Schlauchs 20 und daran anschließend mit einer zweiten kleineren Aufnahme 142 für eine im Außendurchmesser 284 kleinere Ummantelung 28 des beheizbaren Schlauchs 20 versehen. In Figur 1 ist die im Durchmesser 284 kleinere Ummantelung 28 mit der zweiten Aufnahme 142 am Gehäuse 12 im Eingriff. In Figur 2 ist die im Durchmesser 282 größere Ummantelung 28 mit der ersten Aufnahme 144 am Gehäuse 12 im Eingriff. Alternativ zu den dargestellten Ausführungsformen kann außer den beiden abgestuften Aufnahmen 144 bzw. 142 noch wenigstens eine weitere Aufnahme für einen dritten oder weitere verschiedene Durchmesser einer Ummantelung 28 vorgesehen sein.

Der beheizbare Schlauch 20 ist mit einem inneren Schlauchteil 22 versehen, das in Figur 1 einen kleineren Innendurchmesser 232 aufweist, als der größere Durchmesser 234 des inneren Schlauchteils 22 in der Figur 2. Das innere Schlauchteil 22 ist mit seinem linken freien Ende über einen Anschlussstutzen 32 geschoben, der vorzugsweise einstückig mit einem Konnektor 30 ausgebildet ist. Eine im Konnektor 30 und im Anschlussstutzen 32 vorgesehene Bohrung 31 ist bevorzugt im Durchmesser an den Innendurchmesser des inneren Schlauchteils 22 angepasst. Die Befestigung des inneren Schlauchteils 22 am Anschlussstutzen 32 erfolgt durch Kleben, insbesondere wenn es sich um einen Schlauch aus Polyamid (PA) handelt, oder alternativ dazu oder zusätzlich mittels einer Crimp-Verbindung in Form des angedeuteten Crimprings 34, insbesondere wenn es sich um einen Schlauch aus Gummi oder Polyurethan (PU) handelt.

Bevorzugt sind wenigstens zwei getrennt oder gemeinsam mit einem Heizstrom beaufschlagbare elektrische Heizwicklungen 26 in der Wandung 24 des beheizbaren Schlauchs 20 integriert, die nur in Fig. 1 gezeigt sind, aber für alle Ausführungsbeispiele gelten.

Der Konnektor 30 liegt mit einer Anlagefläche auf der in den Figuren 1 bis 4 links liegenden Seite eines ringförmigen Bundes 36 des Gehäuses 12 an. Der Konnektor 30 tritt mit dem Anschlussstutzen 32 durch die innere Öffnung des ringförmigen Bundes 36 hindurch und wird auf der rechten Seite des ringförmigen Bundes 36 mittels einer im Konnektor 30 ausgebildeten Nut 38 und mittels eines mit einem Bund 42 in diese Nut eingreifenden hülsenartigen Fixierelement 40 fixiert. Das nur bei der Ausführungsform gemäß Figur 1 verwendete hülsenartige Fixierelement 40 weist auf seiner dem Ende des beheizbaren Schlauchs 20 zugewandten Seite eine hohlzylindrische Aufnahme auf, in die sich das Ende des beheizbaren Schlauchs 20 einlegt.

Die elektrische Anschlussleitung 50 weist eine erste Leitung 52 und eine zweite Leitung 54 auf und ist bis zum Eintritt in das Aufnahmeteil 16 des Gehäuses 12 mit einer wellrohrartigen Ummantelung 51 versehen. Das Aufnahmeteil 16 weist zur Fixierung der wellrohrartigen Ummantelung wenigstens zwei voneinander beabstandete Rippen 162 auf.

Die erste Leitung 52 und die zweite Leitung 54 sind innerhalb des Gehäuses 12 mit Verbindungsleitungen 58 verbunden, die ihrerseits mit Heizwicklungen 60 am Konnektor 30 und optional mit einer weiteren Heizwicklung 62 verbunden sind, die den Anschlussstutzen 32 umgibt. Die weitere Heizwicklung 62 ist exemplarisch nur in Figur 1 angedeutet; sie ist jedoch ebenso bei den anderen Ausführungsformen einsetzbar.

Durch die Heizwicklung 26 im beheizbaren Schlauch 20, die Heizwicklung 60 am Konnektor 30 und die optional zusätzlich vorhandene Heizwicklung 62 im Bereich des Anschlussstutzens 32 wird das durch den beheizbaren Schlauch 20 und den Konnektor 30 transportierte flüssige Medium durchgehend zuverlässig beheizt.

In Figur 2 ist abweichend von Figur 1 für die Fixierung des Konnektors 30 im Gehäuse 12 kein zusätzliches Fixierelement 40 verwendet. Der Konnektor 30 weist in diesem Fall eine ringförmige Nut 39 auf, die von zwei parallelen Anlageflächen begrenzt wird, die sich beidseitig an den im Gehäuse 12 ausgebildeten Bund 36 anlegen. Alternativ dazu ist eine Fixierung des Konnektors 30 im Gehäuse 12 auch dadurch möglich, dass sich eine Anlagefläche des Konnektors 30 von links an den Bund 36 im Gehäuse 12 anlegt und von der rechten Seite das Ende des beheizbaren Schlauchs 20 bis an den Bund 36 angeschoben und dort auf dem Konnektor 30 fixiert wird.

Ein für die Beschaltung der Heizwicklungen 26, 60 und/oder 62 vorgesehenes, nicht dargestelltes Steuergerät ist mit geeigneten, nicht dargestellten Temperatursensoren verbunden. Das bevorzugt als Steuerplatine ausgebildete Steuergerät ist vorzugsweise an einer geeigneten Stelle im Gehäuse 12 angeordnet. Die Steuerplatine kann beispielsweise in Höhe einer als Schrumpfschlauch ausgebildeten Schrumpfdichtung 56 angeordnet und dort geschützt mit den Leitungen 52,54 und den Verbindungsleitungen 58 sowie den nicht dargestellten Verbindungsleitungen zu den Temperatursensoren verbunden sein. Nach Fertigstellung der Kontaktierung und dem Schrumpfen der Schrumpfdichtung 56 sind alle Leitungsverbindungen und die Steuerplatine vor mechanischen Beanspruchungen, vor Feuchtigkeit und anderen Umwelteinflüssen geschützt im Gehäuse 12 angeordnet.

Beim Ausführungsbeispiel gemäß Figur 3 weist das Gehäuse 12 im Bereich des Konnektors 30 eine Abwinklung um 90° auf. Der Konnektor 30 ist somit in Zug- oder Druckrichtung des beheizbaren Schlauchs 20 schon aufgrund seiner Anordnung im Gehäuse 12 fixiert. Der beheizbare Schlauch 20 ist in Figur 3 mit einem kleineren Durchmesser ausgeführt; dies gilt entsprechend auch für das Wellrohr 28, das sich mit seinem kleineren Außendurchmesser 284 in die im Durchmesser kleinere zweite Aufnahme 142 des Aufnahmeteils 14 am Gehäuse 12 einlegt und dort von den Rippen 1442 fixiert wird.

In Figur 4 ist der beheizbare Schlauch 20 mit einem größeren Innendurchmesser 234 ausgebildet und entsprechend auch mit einer mit einem größeren Außendurchmesser 282 ausgebildeten Ummantelung 28 versehen. Der größere Außendurchmesser 282 des Wellrohrs 28 steht dementsprechend in Eingriff mit der größeren ersten Aufnahme 144 am Aufnahmeteil 14 des Gehäuses 12 und wird dort von den Rippen 1444 fixiert.

Wie in Figur 5 dargestellt, kann alternativ zu den Darstellungen in den Figuren 1 bis 4 der Anschlussstutzen 32 vorteilhaft durch mehrere abgestufte Außendurchmesser 322, 324 auch für eine Verbindung zu mehreren unterschiedlichen Innendurchmessern 232, 234 unterschiedlicher beheizbarer Schläuche 20 vorbereitet sein. In diesem Fall können das Gehäuse 12 und der daran Konnektor 30 besonders vorteilhaft als Gleichteile für unterschiedliche Schlauchweiten und Wellrohrdurchmesser verwendet werden.

### Bezugszeichenliste

- 10: Verbindungselement
- 12: Gehäuse (von 10)
- 121: Filmscharnier
- 122: Rastelemente
- 123: Schale (von 12)
- 124: Schale (von 12)
- 14: Aufnahmeteil (an 12, für 20)
- 142: Aufnahme (für 282)
- 1422: Rippen
- 144: Aufnahme (für 284)
- 1444: Rippen
- 16: Aufnahmeteil (an 12, für 50)
- 162: Rippe
- 18: Ringrippe (an 12)
- 20: Beheizbarer Schlauch
- 22: innerer Schlauchteil
- 232: Innendurchmesser (von 20, klein)
- 234: Innendurchmesser (von 20, groß)
- 24: Wandung
- 26: Heizwicklung
- 28: Ummantelung (Wellrohr, an 20)
- 282: Wellrohr mit größerem Durchmesser
- 284: Wellrohr mit kleinerem Durchmesser
- 30: Konnektor
- 31: Bohrung (in 30 bzw. 32)
- 32: Anschlussstutzen (an 30 für 22)
- 322: größerer Durchmesser (an 32)
- 324: kleinerer Durchmesser (an 32)
- 34: Crimp-Ring
- 36: Bund (an 12, für 30 bzw. 40)
- 38: Nut (an 30, für 42)
- 39: Nut
- 40: Fixierelement
- 42: Bund (an 40)
- 50: Anschlussleitung (für Heizverbindung)
- 51: Ummantelung (Wellrohr, an 50)
- 52: erste Leitung
- 54: zweite Leitung
- 56: Schrumpfelement
- 58: Verbindungsleitung
- 60: Heizwicklung (an 30)
- 62: Heizwicklung (im Bereich von 32))

## Patentansprüche

1. Verbindungselement (10) für einen beheizbaren Schlauch (20), mit einem Fluid führenden inneren Schlauchteil (22) sowie mit einer Ummantelung (28), die in einer Aufnahme (142, 144) an einem Gehäuse (12) des Verbindungselements (10) befestigbar ist, wobei
das Verbindungselement (10) an einem Aufnahmeteil (14) seines Gehäuses (12) wenigstens zwei Aufnahmen (142, 144) aufweist, die zur Aufnahme verschiedener beheizbarer Schläuche (20) mit einem unterschiedlichen Innendurchmesser (232, 234) und/oder einer Ummantelung (28) mit einem unterschiedlichen Außendurchmesser (282, 284) geeignet sind, wobei das Verbindungselement (10) von außen nach innen mit einer ersten größeren Aufnahme (144) für eine im Außendurchmesser (282) größere Ummantelung (28) und daran anschließend mit wenigstens einer kleineren Aufnahme (142) für eine im Außendurchmesser (284) kleinere Ummantelung (28) des beheizbaren Schlauchs (20) versehen ist und wobei das innere Schlauchteil. (22) mit einem im Inneren des Gehäuses (12) vorgesehenen, an den Innendurchmesser (232, 234) des inneren Schlauchteils (22) angepassten Anschlussstutzen (32) verbindbar ist, wobei der Anschlussstutzen (32) wenigstens zwei unterschiedliche Durchmesser zur Anbringung wenigstens zweier verschiedener Schlauchteile (22) mit unterschiedlichen Innendurchmessern (232, 234) aufweist.

2. Verbindungselement (10) nach Anspruch 1, **dadurch gekennzeichnet, dass** das Gehäuse (12) des Verbindungselements (10) wenigstens ein weiteres Aufnahmeteil (16) zur Aufnahme wenigstens einer elektrischen Anschlussleitung (50) aufweist.

3. Verbindungselement (10) nach Anspruch 1 oder 2, **dadurch gekennzeichnet, dass** die Ummantelung (28) als Wellrohr ausgebildet ist und die Aufnahmen (142, 144) mit an die Abstände der Wellen des Wellrohrs angepassten Rippen (1422, 1442) versehen sind.

4. Verbindungselement (10) nach einem der vorhergehenden Ansprüche, **dadurch gekennzeichnet, dass** der Anschlussstutzen (32) an einem im Gehäuse (12) festlegbaren separaten Bauteil (30) angeordnet ist.

5. Verbindungselement (10) nach einem der vorhergehenden Ansprüche, **dadurch gekennzeichnet, dass** das Gehäuse (12) ein Formschlusselement (18) zur Festlegung des Bauteils (30) aufweist.

6. Verbindungselement (10) nach Anspruch 5, **dadurch gekennzeichnet, dass** ein zusätzliches Fixierelement (40) zur Festlegung des Bauteils (30) im Gehäuse (12) aufgenommen ist.

7. Verbindungselement (10) nach einem der vorhergehenden Ansprüche, **dadurch gekennzeichnet, dass** das innere Schlauchteil. (22) mit dem Anschlussstutzen (32) durch Kleben und/oder durch ein zusätzliches Befestigungselement (34) verbunden ist.

8. Verbindungselement (10) nach einem der vorhergehenden Ansprüche, **dadurch gekennzeichnet, dass** das Gehäuse (12) wenigstens zwei Schalen (123, 124) aufweist.

9. Verbindungselement (10) nach Anspruch 8, **dadurch gekennzeichnet, dass** die Schalen (123, 124) mittels eines Scharniers (121) schwenkbar aneinander befestigt sind.

10. Verbindungselement (10) nach Anspruch 8, **dadurch gekennzeichnet, dass** die Schalen (123, 124) mittels wenigstens eines Rastelements (122) miteinander verrastbar sind.

## Claims

1. A connecting element (10) for a heatable hose (20), having a fluid-conducting inner hose part (22) and a jacket (28) that is fastenable in a receptacle (142, 144) on a housing (12) of the connecting element (10), the connecting element (10) having at least two receptacles (142, 144) on a receiving part (14) of its housing (12), the receptacles being suitable for accommodating various heatable hoses (20) having different internal diameters (232, 234) and/or a jacket (28) having a different external diameter (282, 284), the connecting element (10) being provided, from the outside to the inside, with a first larger receptacle (144) for a jacket (28) having a larger external diameter (282), and connected thereto, at least one smaller receptacle (142) for a jacket (28) of the heatable hose (20) having a smaller external diameter (284), the inner hose part (22) being connectable to a connecting piece (32) that is provided in the interior of the housing (12) and adapted to the internal diameter (232, 234) of the inner hose part (22), the connecting piece (32) having at least two different diameters for attaching at least two different hose parts (22) having different internal diameters (232, 234).

2. The connecting element (10) according to Claim 1, **characterized in that** the housing (12) of the connecting element (10) has at least one further receiving part (16) for accommodating at least one electrical connecting line (50).

3. The connecting element (10) according to Claim 1 or 2, **characterized in that** the jacket (28) is designed as a corrugated tube, and the receptacles (142, 144) are provided with ribs (1422, 1442) that are adapted to the distances between the corrugations of the corrugated tube.

4. The connecting element (10) according to one of the preceding claims, **characterized in that** the connecting piece (32) is situated on a separate component (30) that is fixable in the housing (12).

5. The connecting element (10) according to one of the preceding claims, **characterized in that** the housing (12) has a form-fit element (18) for fixing the component (30).

6. The connecting element (10) according to Claim 5, **characterized in that** an additional fixing element (40) for fixing the component (30) is accommodated in the housing (12).

7. The connecting element (10) according to one of the preceding claims, **characterized in that** the inner hose part (22) is connected to the connecting piece (32) by gluing and/or by an additional fastening element (34).

8. The connecting element (10) according to one of the preceding claims, **characterized in that** the housing (12) has at least two shells (123, 124).

9. The connecting element (10) according to Claim 8, **characterized in that** the shells (123, 124) are pivotably fastened to one another by means of a hinge (121).

10. The connecting element (10) according to Claim 8, **characterized in that** the shells (123, 124) are lockable to one another by means of at least one detent element (122).

## Revendications

1. Elément de liaison (10) destiné à un tuyau souple (20) apte au chauffage, comprenant une partie interne (22) canalisant un fluide, ainsi qu'un gainage (28) pouvant être fixé dans un logement (142, 144), sur un boîtier (12) dudit élément de liaison (10),
ledit élément de liaison (10) comportant, sur une partie réceptrice (14) de son boîtier (12), au moins deux logements (142, 144) se prêtant à la réception de différents tuyaux souples (20) aptes au chauffage, à diamètres intérieurs (232, 234) différents, et/ou d'un gainage (28) à diamètres extérieurs (282, 284) différents, ledit élément de liaison (10) étant pourvu, de l'extérieur vers l'intérieur, d'un premier logement (144) de fort dimensionnement, dévolu à un gainage (28) à fort diamètre extérieur (282) et, dans l'enchaînement direct, d'au moins un logement (142) de dimensionnement plus faible, dédié à un gainage (28) dudit tuyau souple (20) apte au chauffage qui présente un plus petit diamètre extérieur (284), et la partie interne (22) dudit tuyau pouvant être reliée à un manchon de raccordement (32) prévu à l'intérieur dudit boîtier (12) et adapté au diamètre intérieur (232, 234) de ladite partie interne (22) du tuyau, sachant que ledit manchon de raccordement (32) présente au moins deux diamètres différents, en vue du rattachement d'au moins deux parties internes différentes (22) du tuyau, dotées de différents diamètres intérieurs (232, 234).

2. Elément de liaison (10) selon la revendication 1, **caractérisé par le fait que** le boîtier (12) dudit élément de liaison (10) comporte au moins une partie réceptrice (16) supplémentaire, en vue de recevoir au moins un conducteur de jonction électrique (50).

3. Elément de liaison (10) selon la revendication 1 ou 2, **caractérisé par le fait que** le gainage (28) est réalisé sous la forme d'un tube annelé, et les logements (142, 144) sont munis de nervures (1422, 1442) adaptées aux espacements des ondulations dudit tube annelé.

4. Elément de liaison (10) selon l'une des revendications précédentes, **caractérisé par le fait que** le manchon de raccordement (32) est disposé sur une pièce structurelle distincte (30) pouvant être bloquée à demeure dans le boîtier (12).

5. Elément de liaison (10) selon l'une des revendications précédentes, **caractérisé par le fait que** le boîtier (12) comporte un élément (18) d'assemblage par complémentarité de formes, en vue du blocage à demeure de la pièce structurelle (30).

6. Elément de liaison (10) selon la revendication 5, **caractérisé par le fait qu'**un élément d'assujettissement (40) additionnel, affecté au blocage à demeure de la pièce structurelle (30), est logé dans le boîtier (12).

7. Elément de liaison (10) selon l'une des revendications précédentes, **caractérisé par le fait que** la partie interne (22) du tuyau est reliée au manchon de raccordement (32) par collage et/ou par l'intermédiaire d'un élément de fixation (34) additionnel.

8. Elément de liaison (10) selon l'une des revendications précédentes, **caractérisé par le fait que** le boîtier (12) comprend au moins deux coques (123, 124).

9. Elément de liaison (10) selon la revendication 8, **caractérisé par le fait que** les coques (123, 124) sont fixées l'une à l'autre de manière pivotante, au moyen d'une charnière (121).

10. Elément de liaison (10) selon la revendication 8, **caractérisé par le fait que** les coques (123, 124) peuvent être solidarisées par encliquetage, à l'aide d'au moins un élément encliquetable (122).
